Europäisches Patentamt

European Patent Office

Office européen des brevets

(19)

(11) Numéro de publication : **0 061 396**
**B1**

(12) **FASCICULE DE BREVET EUROPÉEN**

(45) Date de publication du fascicule du brevet :
26.09.84

(21) Numéro de dépôt : **82400491.5**

(22) Date de dépôt : **18.03.82**

(51) Int. Cl.³ : **G 21 C 19/36**

(54) Dispositif rotatif permettant de cisailler un faisceau de tubes contenant des combustibles nucléaires brûlés.

(30) Priorité : **24.03.81 FR 8105880**

(43) Date de publication de la demande :
**29.09.82 Bulletin 82/39**

(45) Mention de la délivrance du brevet :
**26.09.84 Bulletin 84/39**

(84) Etats contractants désignés :
**BE CH DE FR GB IT LI SE**

(56) Documents cités :
**FR-A- 1 379 741**
**FR-A- 2 186 711**
**FR-A- 2 242 751**
**FR-A- 2 257 983**
**FR-A- 2 324 093**
**FR-A- 2 324 094**

(73) Titulaire : **SOCIETE GENERALE POUR LES TECHNI-QUES NOUVELLES S.G.N. Société anonyme dite:**
**1, rue des Hérons Montigny-le-Bretonneux**
**F-78184 Saint-Quentin en Yvelines Cedex (FR)**

(72) Inventeur : **Guilloteau, René**
**9 rue du Docteur Roux**
**F-91370 Verrieres le Buisson (FR)**

(74) Mandataire : **Combe, André et al**
**Cabinet BEAU DE LOMENIE 99, Grande rue de la Guillotière**
**F-69007 Lyon (FR)**

Jouve, 18, rue St-Denis, 75001 Paris, France

## Description

La présente invention concerne un dispositif rotatif permettant de cisailler un faisceau de tubes contenant des combustibles brûlés.

Après séjour dans un réacteur, les faisceaux de tubes contenant les combustibles brûlés dans une pile atomique sont découpés en petits éléments sur lesquels il est plus facile de réaliser les opérations physicochimiques ultérieures (par exemple des dissolutions) en vue d'un retraitement des combustibles.

L'objet de la présente invention est un dispositif permettant de réaliser cette découpe des faisceaux de tubes dans des conditions de sécurité et de fiabilité nettement améliorées par rapport aux dispositifs actuellement utilisés ou précédemment décrits.

Dans une solution précédemment décrite, on utilise, pour la coupe de ces faisceaux de tubes, une lame à course rectiligne telle que celle mentionnée dans le brevet français FR-A-2 324 094. Le dispositif décrit dans ce brevet comporte des moyens de coupe, des moyens pour la mise en place et le déplacement vertical, entre chaque coupe, du faisceau de tubes et des serre-flans pour maintenir en place les tubes à couper. Les moyens pour couper sont composés :

— d'une part d'une lame et des moyens pour la déplacer,

— d'autre part d'une contre-lame.

Dans ce même brevet, on a indiqué qu'il était possible d'envisager l'utilisation d'une lame ayant une course circulaire.

Il est apparu tout d'abord que la coupe des faisceaux de tubes pouvait être avantageusement réalisée en utilisant un dispositif de coupe entraîné par un moteur à vitesse lente, c'est-à-dire d'environ 1 à environ 10 tours/min, mais à couple très élevé, c'est-à-dire compris entre environ 0,5 et environ 1 MN/m.

Il est apparu ensuite qu'il était indispensable d'isoler soigneusement la partie du dispositif selon l'invention qui est en contact avec le combustible radioactif et la partie du dispositif où est situé le moteur. Cette séparation s'effectue par l'utilisation combinée de joints et d'une circulation gazeuse convenable.

De plus, le dispositif de coupe est constitué d'un rotor porteur de dents étagées, lesdites dents étant les parties coupantes du dispositif. Ces dents sont soit formées par des excroissances disposées sur le rotor soit formées par une échancrure de forme convenable découpée dans le rotor. Il est essentiel que les dents soient symétriquement disposées par rapport à l'axe du faisceau à couper et que ledit faisceau soit attaqué à chaque instant par les dents disposées en face des bords extérieurs dudit faisceau.

La présente invention concerne donc un dispositif rotatif permettant de couper un faisceau de tubes contenant des combustibles nucléaires comportant :

— des moyens de coupe entraînés en rotation, autour d'un axe horizontal, par un moteur,

— un magasin recevant ledit faisceau de tubes, disposé au-dessus desdits moyens de coupe et pouvant être convenablement positionné par rapport auxdits moyens de coupe, caractérisé en ce que :

— lesdits moyens de coupe sont solidaires d'un rotor lui-même entraîné par ledit moteur dont la vitesse de rotation est réglable entre 1 et 10 tours/minute et dont le couple est compris entre environ 0,5 et 1 MN/m.

— ledit rotor est isolé dudit moteur par utilisation de joints et d'une circulation gazeuse,

— lesdits moyens de coupe sont constitués par une série de dents coupe-tubes disposées en étage de façon que ledit faisceau soit attaqué symétriquement par ses bords extérieurs.

De plus, comme il est avantageux que le même dispositif permette de couper à la fois les faisceaux de tubes et les pieds (ou embouts) de ces faisceaux, il a été prévu que le dispositif selon la présente invention pouvait comporter en bout de rotor porte-dents, assurant la coupe des faisceaux, une lame coupe-pied, entraînée par le même moteur. Le faisceau pourra donc se déplacer, par un mouvement de translation ou de pivotement autour d'un axe vertical, pour être amené successivement au-dessus de la lame coupe-pied puis au-dessus du rotor porte-dents pour le cisaillement des tubes et tirants du faisceau.

Pour alléger la description qui suit et qui permet de mieux comprendre la teneur de l'invention, on désigne l'ensemble du dispositif par le terme « cisaille ».

On décrit plusieurs variantes du dispositif sans que la portée générale de l'invention soit limitée par ces exemples ou par les figures.

Les figures représentent dans leur ensemble deux versions différentes de la réalisation pour les pièces tournantes. On y adjoint deux modes de déplacement du magasin contenant le faisceau de tubes, étant entendu que ces deux modes de déplacement s'appliquent aux deux versions précédentes.

La figure 1 représente une première version de la cisaille où les bagues de roulement sont situées côté coupe. Cette figure 1 représente une coupe verticale.

La figure 2 représente la même version pour la partie tournante, mais vue en perspective éclatée.

La figure 3 représente une deuxième version de la cisaille où les bagues de roulement sont situées côté moteur de sorte que la partie coupe soit en porte à faux.

La figure 4 représente la partie tournante de la deuxième version, en perspective éclatée.

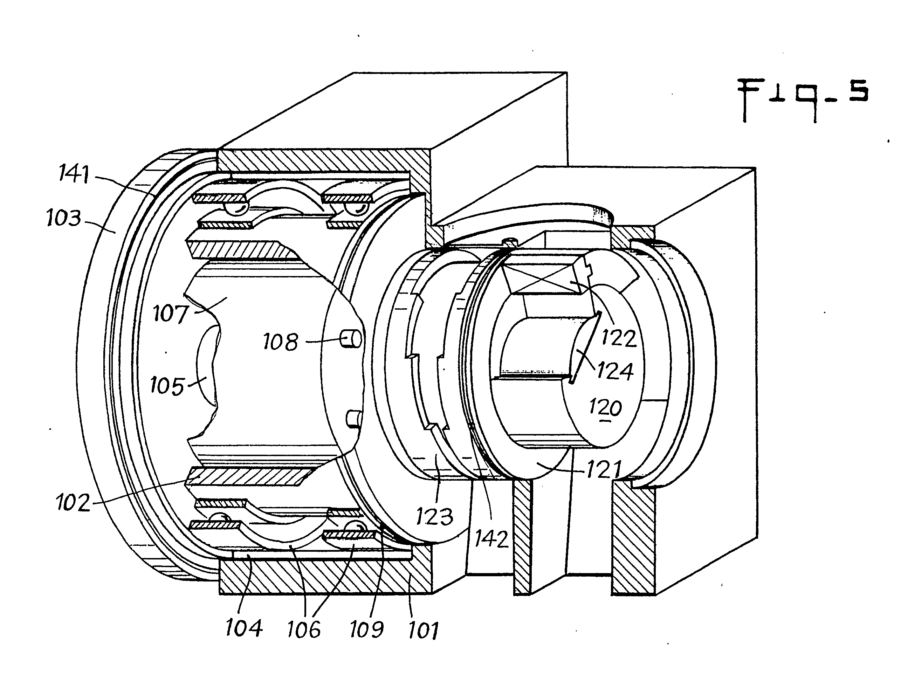

La figure 5 représente la deuxième version de la cisaille en perspective partiellement écorchée.

La figure 6 représente un exemple de déplacement du magasin porte-faisceau (déplacement par rotation), en vue perspective partiellement écorchée.

Exemple 1 : description d'une cisaille selon l'invention (première version).

La cisaille se compose d'un bâti 1 fermé d'un côté par un bouchon-porte 2 auquel est fixé l'arbre horizontal 3. L'autre extrémité du bâti est fermée par une porte 4.

Sur l'arbre 3 sont placés les fourreaux 5 et 6. Sur le fourreau 5 tourne un moteur 9, par exemple hydraulique, ou un ensemble de moteurs. La vitesse de rotation de ce (ou ces) moteur(s) est réglable entre 1 et 10 tours/min. Le couple total doit être compris entre 0,5 et 1 MN/m.

Sur le fourreau 6 sont montées deux bagues de roulement 7. Autour de ces bagues tourne le rotor 10 entraîné par le moteur 9 par l'intermédiaire d'un ou plusieurs pions 11.

Un joint d'étanchéité 8 est monté entre le rotor 10 et le bâti 1. Sur le rotor 10 est fixé concentriquement le porte-lame 12 portant les dents étagées 13 et la dent unique 19. Les dents étagées sont destinées à couper les tubes du faisceau alors que la dent 19 ne coupe que le pied du faisceau.

On peut usiner les dents dans la masse de la pièce 12 ou les rapporter et les fixer à cette même pièce 12 par exemple par des vis (non représentées).

Intérieurement au porte-lame, on monte sur le fourreau 6 la bague 14.

Les moyens de fixation entre elles, en rotation, des différentes pièces tournantes, ne sont pas représentés. On choisira par exemple une solution par cannelures entre les pièces 10 et 12 et par vis entre les pièces 14 et 10.

La bague 14 présente une échancrure 15 dans laquelle s'engage le pied du faisceau pour la coupe dudit pied. Des rainures latérales 16 permettent de placer dans l'échancrure un calibre 17. La surface du calibre 17 est usinée cylindrique coaxiale à l'ensemble du rotor. Le rôle de ce calibre sera décrit dans l'exemple de fonctionnement de la cisaille.

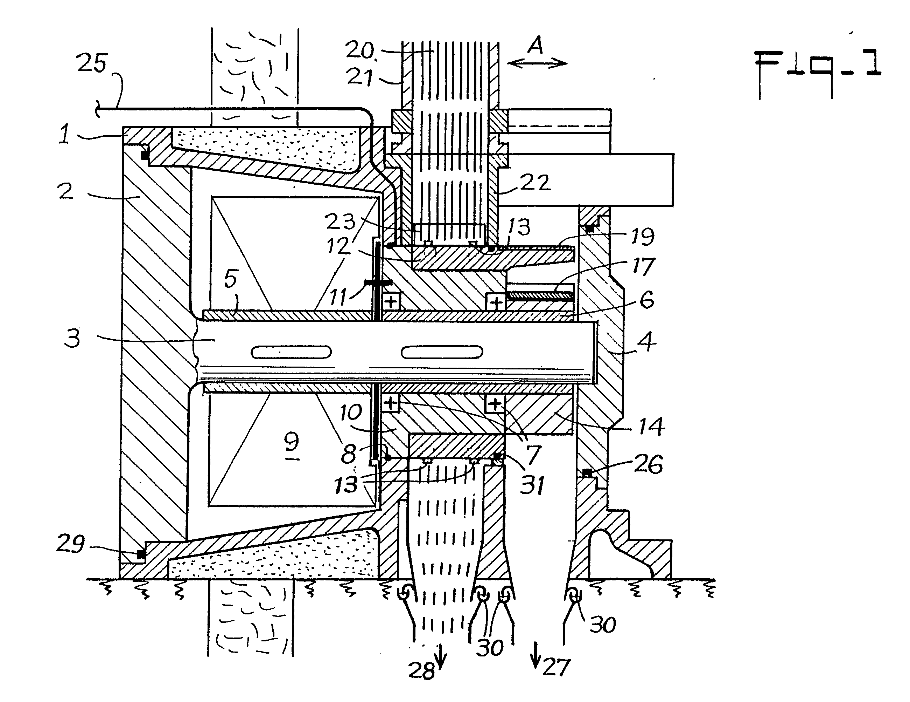

La partie supérieure du bâti comporte une ouverture où est fixé le presseur 22. Sur la figure 1, ledit presseur peut être déplacé par translation suivant la flèche A. Au presseur, on fixe un magasin 21 contenant le faisceau de tubes 20 à cisailler.

Le bâti comprend une partie 23 faisant contre-lame lors du cisaillage.

Pour éviter la dissémination des poussières créées à partir du combustible, on insuffle un gaz tel que l'air ou l'azote par la tubulure 25.

Pour la même raison, entre la porte 4 et le bâti 1, on intercale un joint d'étanchéité 26, entre la porte 2 et le bâti 1, un joint 29, entre le bâti 1 et le porte-lame 12, un joint 31.

Un dispositif non représenté a pour but d'appuyer sur l'extrémité supérieure du faisceau de tubes pour assurer la descente après chaque coupe.

Le fonctionnement de la présente version de cisaille selon l'invention est détaillée ci-après.

Le presseur 22 est amené en position droite, c'est-à-dire au-dessus de l'encoche 15. On choisit un calibre 17 d'épaisseur idoine pour que la partie supérieure de la lame 19 soit à la même hauteur que le haut du pied du faisceau lorsque le pied touche le calibre 17. On effectue un demi-tour de moteur de manière que la lame 19 cisaille le pied, puis un autre demi-tour pour entraîner la partie coupée jusqu'à l'évacuation 27.

On déplace ensuite l'ensemble 20, 21, 22 jusqu'à la position gauche, c'est-à-dire au-dessus des dents 13 et l'on fait tourner le moteur d'un mouvement continu à une vitesse comprise entre 1 et 10 tours/min.

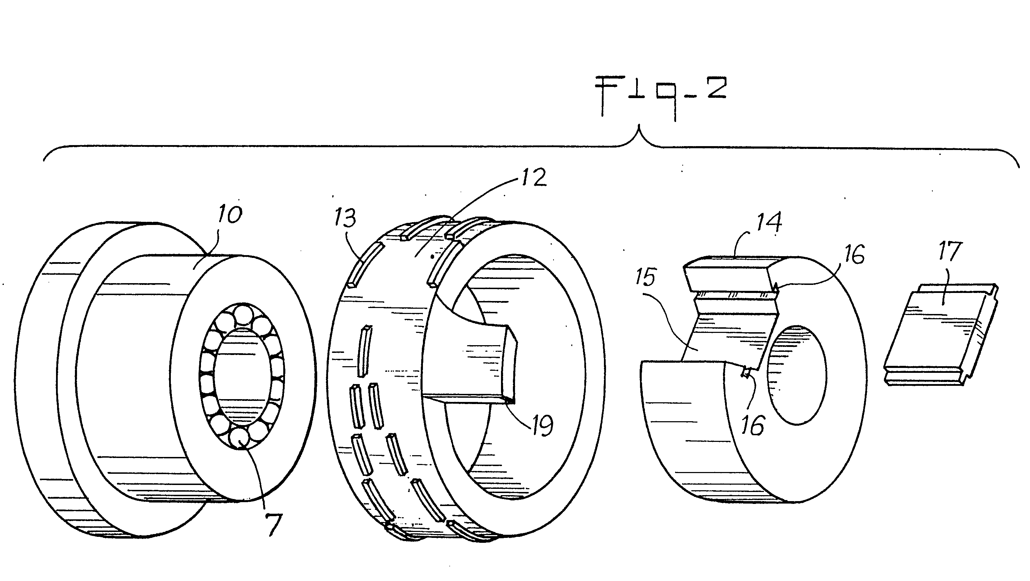

Comme on le voit sur la figure 2, les dents 13 sont décalées, ce qui a pour effet de rendre progressive la coupe du faisceau de tubes. Contrairement à une dent unique droite qui couperait sur toute sa largeur, on a choisi après essais le système décrit. La longueur circonférentielle des dents est telle qu'un jeu de dents n'attaque que lorsque le jeu immédiatement précédent a fini de couper le faisceau : la longueur développée de chaque dent est au moins égale à la largeur totale du faisceau de tubes.

Quand un jeu a terminé sa coupe, le dispositif déjà indiqué fait descendre l'ensemble du faisceau d'une hauteur égale à la hauteur des dents et la coupe est reprise par le jeu suivant de dents.

Sur la figure 2, on a représenté un porte-lame comportant deux jeux de dents réparties en 6 étages, mais ces nombres peuvent être changés, en particulier en fonction des dimensions des tubes constituant les faisceaux, ou de la dureté du métal des tubes, entre autres facteurs.

La denture sera choisie par expérience.

Les morceaux de tubes cisaillés accompagnent le rotor pendant un demi-tour et tombent par l'évacuation 28 par exemple vers un dissolveur (non représenté).

Les évacuations 27 et 28 sont représentées sur la figure 1 avec des gardes hydrauliques évitant une propagation extérieure de la contamination ou des sorties de vapeur remontant du dissolveur.

Exemple 2 : description d'une autre cisaille selon l'invention (dite deuxième version).

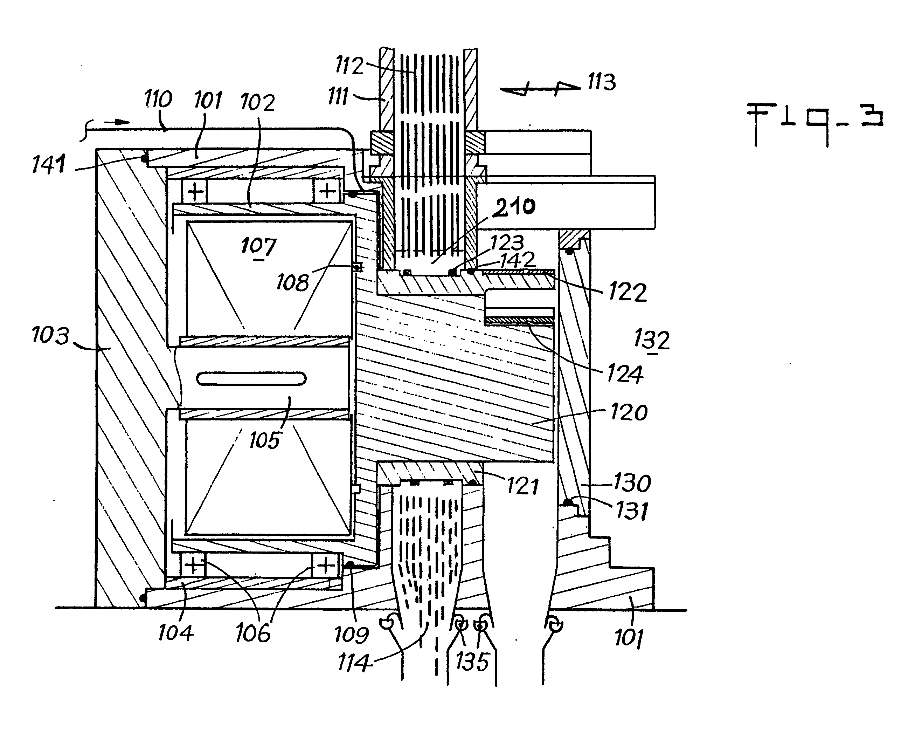

La deuxième version diffère de la première par une séparation plus poussée de la partie mécanique « propre » et de la partie coupe « polluée ». Pour ce faire, la partie coupe a été montée en porte à faux pour l'éloigner des roulements. La figure 3 représente cette deuxième version en coupe. On y retrouve pratiquement les mêmes pièces que sur la version précédente.

Un bâti 101 est fermé à une extrémité par un bouchon-porte 103 auquel est fixé un arbre non tournant 105. Le bâti comporte un alésage sur lequel est emmanché le fourreau 104. A l'intérieur dudit fourreau sont logées deux bagues de roulement 106.

La partie tournante se compose du moteur 107 identique à celui décrit dans la première version de réalisation selon l'invention, et du rotor 102. La partie arrière dudit rotor tourne à l'intérieur des bagues de roulement 106 de telle manière que la partie coupe se trouve tourner en porte à faux.

L'étanchéité entre la partie arrière et la partie coupe est assurée par un joint 109.

La partie coupe est également simplifiée par rapport à la première version décrite plus haut, en ce sens que la bague 14 de la figure 1 de la première version n'est plus distincte du rotor : la pièce 120 (partie avant du rotor de la figure 3) regroupe les pièces 10 et 14 de la figure 1 de la première version, si bien que l'encoche 125 est usinée dans la pièce 120.

On retrouve inchangé dans la deuxième version le calibre de profondeur 124, le porte-lame 121, la dent de coupe du pied 122 et les dents de coupe des tubes 123.

Se trouve également représentée sur la figure 3 la partie approvisionnement qui a, sur cette figure, la même configuration que dans la première version. Il est donc inutile de la décrire une seconde fois.

Comme dans la première version, la machine est isolée par des gardes hydrauliques 135.

De la même manière, la porte avant 130 comporte un joint d'étanchéité 131 pour éviter une sortie de poussière vers l'ambiance de la cellule de travail 132, la porte gauche porte le joint 141, et entre le porte-lame et le bâti est placé le joint 142.

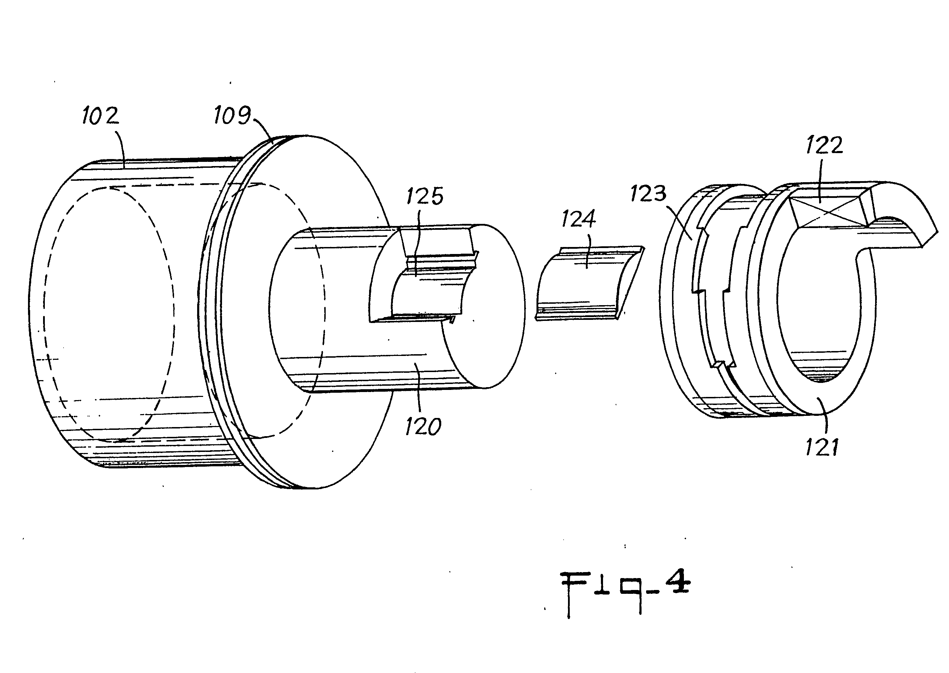

On sera aidé par la comparaison des figures 2 et 4 pour mieux voir la différence de réalisation entre les deux versions de réalisation de l'invention.

Le fonctionnement de ce deuxième mode de mise en œuvre de l'invention est identique à celui de la première version, tant en ce qui concerne la coupe du pied qu'en ce qui concerne la coupe des tubes du faisceau. Bien évidemment, le sens de rotation des éléments de coupe devra être adapté à la forme des dents.

Dans la description des deux versions de réalisation, on a utilisé le principe de déplacement du magasin par translation pour passer de la coupe du pied à la coupe des tubes.

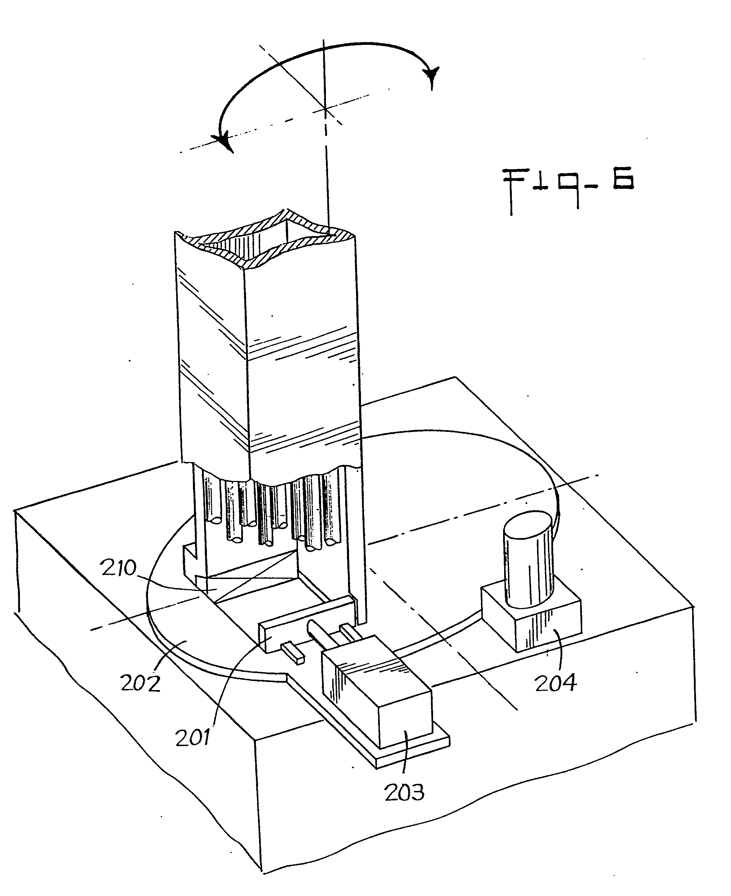

La figure 6 représente en perspective une deuxième réalisation de ce déplacement : le presseur 201 et le porte-magasin sont montés sur une platine tournante 202. Sur cette figure, on a également représenté un vérin 203 actionnant le presseur et la contre-lame 210. Cette partie du mécanisme n'est pas représentée sur les figures 1 et 3 pour alléger le dessin.

Dans ce cas, le sens de rotation de l'élément de coupe pourra être inversé, si nécessaire, (cela dépendra de la disposition des dents) entre la coupe du pied et celle des tubes.

Le deuxième mode de mise en œuvre de l'invention comporte un certain nombre d'avantages par rapport au premier mode de mise en œuvre. Ainsi :

— la séparation absolue entre la partie mécanique comportant le moteur et les roulements de la partie coupe comprenant le porte-lame, les lames et dents et l'approvisionnement, simplifie les opérations mécaniques à opérer sur la cisaille ;

— les opérations sur la partie coupe, c'est-à-dire les changements de lames ou de dents, se font sur une partie polluée mais avec facilité d'intervention ; il est aisé de démonter en télémanipulation, après dépoussiérage, la porte avant 130 et le porte-lame 121 pour le remplacer par un autre porte-lame avec lames et dents neuves ;

— et dans le but de faciliter la télémanipulation, on a avantage à solidariser en rotation le porte-lame avec la partie avant du rotor en creusant des cannelures mâles et femelles sur les deux pièces.

Il est évident que toutes les positions relatives sont possibles, sans sortir du cadre revendiqué par la présente invention. En particulier, il peut être intéressant, pour des questions d'encombrement en hauteur, de placer le faisceau de tubes horizontalement, l'axe de la cisaille pouvant être horizontal ou vertical.

**Revendications**

1. Dispositif rotatif permettant de couper un faisceau de tubes (20 ; 112) contenant des combustibles nucléaires comportant :

— des moyens de coupe (12, 13, 19 ; 121, 123, 122) entraînés en rotation, autour d'un axe horizontal, par un moteur (9 ; 107),

— un magasin (21 ; 111) recevant ledit faisceau de tubes, disposé au-dessus desdits moyens de coupe et pouvant être convenablement positionné par rapport auxdits moyens de coupe, caractérisé en ce que :

— lesdits moyens de coupe sont solidaires d'un rotor (10 ; 102) lui-même entraîné par ledit moteur dont la vitesse de rotation est réglable entre 1 et 10 tours/minute et dont le couple est compris entre environ 0,1 et 1 MN/m.

— ledit rotor est isolé dudit moteur par utilisation de joints (8, 26, 29, 31 ; 109, 131, 141, 142) et d'une circulation gazeuse (25 ; 110),

— lesdits moyens de coupe sont constitués par une série de dents coupe-tubes (13 ; 123) disposées en étage de façon que ledit faisceau soit attaqué symétriquement par ses bords extérieurs.

2. Dispositif selon la revendication 1, caractérisé en ce que lesdits moyens de coupe comportent, outre ladite série de dents coupe-tubes (13 ; 123) une lame coupe-pied (19 ; 122) et que ledit magasin (21 ; 111) peut être positionné au-dessus de ladite lame coupe-pied et au-dessus de ladite série de dents coupe-tubes.

3. Dispositif selon la revendication 2, caractérisé en ce que ladite lame coupe-pied (19 ; 122) est située à l'extrémité d'un porte-lame (12 ; 121), fixé concentriquement sur le rotor (10 ; 102) et portant lesdites dents coupe-tubes (13 ; 123) et que le magasin (21 ; 111) se déplace par translation pour se situer au-dessus de l'un ou de l'autre des moyens de coupe.

4. Dispositif selon la revendication 2, caractérisé en ce que ladite lame coupe-pied (19 ; 122) est située à l'extrémité d'un porte-lame (12 ; 121), fixé concentriquement sur le rotor (10 ; 102) et portant lesdites dents coupe-tubes et que le magasin se déplace par rotation pour amener le faisceau au-dessus de l'un ou de l'autre desdits moyens de coupe.

5. Dispositif selon l'une des revendications 1, 2 et 3, caractérisé en ce que les dents coupe-tubes sont constituées par des excroissances (13) isolées.

6. Dispositif selon l'une des revendications 1, 2 et 3, caractérisé en ce que les dents coupe-tubes (123) sont constituées par une échancrure de forme convenable.

7. Dispositif selon l'une des revendications 1 à 6, caractérisé en ce que ledit rotor (102) est monté en porte à faux par rapport au moteur (107).

**Claims**

1. Rotary device for shearing a bundle of tubes (20 ; 112) containing nuclear fuels, comprising :
— cutting means (12, 13, 19 ; 121, 123, 122) driven in rotation about a horizontal axis by a motor (9 ; 107),
— a magazine (21, 111) which receives said bundle of tubes being placed above the said cutting means and being suitably adjustable with respect to the said cutting means, characterized in that :
— the said cutting means are integral with a rotor (10 ; 102) driven by said motor whose rotation speed is adjustable between 1 and 10 revs. per minute and whose torque is between about 0.1 and 1 NM/min.
— said rotor is isolated from the said motor by using joints (8, 26, 29, 31 ; 109, 131, 141, 142) and a circulation of gas (25, 110),
— said cutting means are constituted by a series of tube-cutting teeth (13, 123) which are staggered so that the bundle is attached symmetrically by its external edges.

2. Device according to claim 1, characterized in that said cutting means comprise, in addition to the said series of tube-cutting teeth (13 ; 123) a foot-cutter (19, 122) and in that said magazine (21 ; 111) can be positioned above the said foot-cutter and above the said set of tube-cutting teeth.

3. Device according to claim 2, characterized in that the said foot-cutter (19, 122) is situated at the end of a cutter-bar concentrically fixed on the rotor (10 ; 102) carrying the said tube-cutting teeth (13 ; 123) and in that the magazine (21 ; 111) moves by translation to come in position above either one of the cutting means.

4. Device according to claim 2, characterized in that said foot cutter (19 ; 122) is situated at the end of a cutter-bar concentrically fixed on the rotor (10 ; 102) and carrying said tube-cutting teeth and in that the magazine moves by rotation to bring the bundle above either one of the said cutting means.

5. Device according to any one of claims 1, 2 and 3, characterized in that the tube-cutting teeth are constituted by separate excrescences (13).

6. Device according to any one of claims 1, 2 and 3, characterized in that the tube-cutting teeth (123) are constituted by a suitably-shaped notch.

7. Device according to any one of claims 1 to 6, characterized in that said rotor (102) is mounted to overhang with respect to the motor (107).

**Ansprüche**

1. Drehvorrichtung zum Schneiden eines nukleare Brennstoffe enthaltenden Rohrbündels (20 ; 112), mit :
— um eine horizontale Achse durch einen Motor (9 ; 107) rotationsbetriebenen Schneidmitteln (12, 13, 19 ; 121, 123, 122),
— einem oberhalb der Schneidmittel angeordneten Magazin (21 ; 111) zur Aufnahme des Rohrbündels, welches in bezug auf die Schneidmittel zweckmäßig positionierbar ist, dadurch gekennzeichnet, daß :
— die Schneidmittel mit einem Rotor (10 ; 102) verbunden sind, welcher selbst durch den Motor angetrieben ist, dessen Rotationsgeschwindigkeit zwischen 1 und 10 Umdrehungen/Minute regulierbar ist und dessen Moment etwa zwischen 0,1 und 1 MN/m beträgt,
— der Rotor durch den Einsatz von Fugen (8, 26, 29, 31 ; 109, 131, 141, 142) und einer Gaszirkulation (25 ; 110) vom Motor getrennt ist,
— die Schneidmittel durch eine Reihe von Rohrabschneidzähnen (13 ; 123) gebildet sind, welche derart abgestuft angeordnet sind, daß das Rohrbündel symmetrisch über seine Außenränder angegriffen wird.

2. Vorrichtung nach Anspruch 1, dadurch gekennzeichnet, daß die Schneidmittel neben der Reihe von Rohrabschneidzähnen (13 ; 123) ein Fußabschneidmesser (19 ; 122) umfassen und daß das Magazin (21 ; 111) oberhalb des Fußabschneidmessers und oberhalb der Reihe von Rohrabschneidzähnen angeordnet werden kann.

3. Vorrichtung nach Anspruch 2, dadurch gekennzeichnet, daß das Fußabschneidmesser (19 ; 122) am Ende eines Messerträgers (12 ; 121) vorgesehen ist, welcher konzentrisch am Rotor (10 ; 102) fixiert ist und die Rohrabschneidzähne (13 ; 123) trägt, und daß das Magazin (21, 111) derart verschiebbar ist, daß es über dem einen oder dem anderen Schneidmittel zu liegen kommt.

4. Vorrichtung nach Anspruch 2, dadurch gekennzeichnet, daß das Fußabschneidmesser (19 ; 122) am Ende eines Messerträgers (12 ; 121) vorgesehen ist, welcher konzentrisch am Rotor (10 ; 102) fixiert ist und die Rohrabschneidzähne trägt, und daß sich das Magazin durch Rotation verschiebt, um das Bündel über das eine oder das andere der Schneidmittel zu bringen.

5. Vorrichtung nach einem der Ansprüche 1, 2 und 3, dadurch gekennzeichnet, daß die Rohrabschneidzähne durch getrennte Vorsprünge (13) gebildet sind.

6. Vorrichtung nach einem der Ansprüche 1, 2 und 3, dadurch gekennzeichnet, daß die Rohrabschneidzähne (123) durch eine Ausnehmung geeigneter Form gebildet sind.

7. Vorrichtung nach einem der Ansprüche 1 bis 6, dadurch gekennzeichnet, daß der Rotor (102) in bezug auf den Motor (107) vorkragend ausgebildet ist.

Fig-1

25

20

21

A

1

2

23

12

11

5

13

19

17

6

3

4

10

7

8

9

14

13

31

29

26

28

30

30

27

30

0 061 396

Fig-2

Fig. 3

0 061 396

Fig-4

Fig-5

Fig. 6